# EUROPÄISCHE PATENTSCHRIFT

(11) **EP 2 560 485 B1**
(45) Veröffentlichungstag und Bekanntmachung des Hinweises auf die Patenterteilung: **10.10.2018**
(21) Anmeldenummer: 11714571.4
(22) Anmeldetag: 18.04.2011
(51) Int. Cl.: A01N 25/22, A01N 55/00, A01N 25/04

(54) **TRIGLYZERID-ENTHALTENDE WINTERSPRITZMITTEL**
TRIGLYCERIDE-CONTAINING WINTER SPRAYING AGENTS
PARASITICIDES CONTENANT DES TRIGLYCÉRIDES POUR PÉRIODE HIVERNALE

(30) Priorität: 23.04.2010 US 327289 P; 23.04.2010 EP 10160859
(43) Veröffentlichungstag der Anmeldung: 27.02.2013
(73) Patentinhaber: Bayer CropScience Aktiengesellschaft, 40789 Monheim (DE)
(72) Erfinder: VERMEER, Ronald, 40789 Monheim (DE); BAUR, Peter, 86938 Schondorf (DE); GAERTZEN, Oliver, 50931 Köln (DE); NAGEL, Christian, Singapore 049514 (SG); HAAS, Matthias, 42799 Leichlingen (DE)
(74) Vertreter: BIP Patents
(86) Internationale Anmeldenummer: PCT/EP2011/056121
(87) Internationale Veröffentlichungsnummer: WO 2011/131616

(56) Entgegenhaltungen:
- EP-A1- 2 002 719
- JP-A- 2003 063 908
- JP-A- 2005 170 892
- DATABASE BIOSIS [Online] BIOSCIENCES INFORMATION SERVICE, PHILADELPHIA, PA, US; September 2008 (2008-09), RYCKAERT BERT ET AL: "Possibilities to use tank-mix adjuvants for better fungicide spreading on triticale ears", XP002597905, Database accession no. PREV200800577247 & RYCKAERT BERT ET AL: "Possibilities to use tank-mix adjuvants for better fungicide spreading on triticale ears", JOURNAL OF AGRICULTURAL AND FOOD CHEMISTRY, AMERICAN CHEMICAL SOCIETY, US, Bd. 56, 10. September 2008 (2008-09-10), Seiten 8041-8044, XP002597905, ISSN: 0021-8561, DOI: 10.1021/JF8005257 [gefunden am 2008-08-07]

## Beschreibung

Die vorliegende Erfindung betrifft ölbasierte Suspensionskonzentrate, Verfahren zur deren Herstellung und deren Verwendung zur Applikation von agrochemischen Wirkstoffen.

Ferner betrifft die vorliegende Erfindung die Verwendung von speziellen Adjuvantien zur Verbesserung des Bedeckungsgrads von agrochemischen Formulierungen auf Pflanzen.

Zur Kontrolle von Überwinterungsstadien verschiedener Insekten werden in der Obstbaupraxis früh im Jahr oft sogenannte Winterspritzungen (Voraustriebsspritzungen) vorgenommen. Die Bäume befinden sich zu diesem Zeitpunkt noch in einem Stadium der Knospenruhe, was nicht gewollte Wechselwirkungen zwischen Nutzinsekten und Pflanzenschutzmittel, wie sie während der Blüte auftreten könnten, vermeidet. Bei diesen Spritzungen, welche in englischer Fachsprache auch als *dormancy sprays* bezeichnet werden, wird zu einem Zeitpunkt, an dem sich weder Blätter noch Blüten an den zu behandelnden Bäumen befinden, eine größere Menge eines so genannten Dormant-Öls ausgebracht. Dormant-Öle sind im Allgemeinen auf Mineralöl basierende Formulierungen, die darüber hinaus weitere Formulierhilfsmittel, beispielsweise Emulgatoren, enthalten. Eine typische Hektaraufwandmenge liegt bei ca. 40 oder mehr Litern eines Dormant-Öls welches mit 1000 bis 1500 Liter Wasser zu einer Spritzbrühe verdünnt und ausgebracht wird.

Schadinsekten, welche mittels dieser Methode bekämpft werden können, sind zum Beispiel Schildläuse (z.B. Pseudococcus und Planococcus), Milben (z.B. Aceria anthocoptes) und überwinternde Stadien (z.B. Eier und Larven) von Spinnmilben (Panonychus sp.), Schildläusen (z.B. Quadraspidiotus perniciosus) und Blattläusen (z.B. Dysaphis plantaginea).

Jahrelange Erfahrung hat jedoch gezeigt, dass die Kontrolle der verschiedenen frühen Blattlausarten (Dysaphis plantaginea oder Myzus persicae) oft nicht ausreichend ist. Zur Verbesserung dieser Blattlaus-Wirkung wird daher üblicherweise eine Öl-Winterspritzung in Kombination mit einem Insektizid ausgebracht. Dieses kann nach Verdünnung der konzentrierten Formulierung der Spritzbrühe zugegeben werden (Tank-Mix) oder als Fertigformulierung in das Ölgerüst eingebaut werden (In-can-Formulierung).

Ein Bericht von Cantoni et al. (Pflanzenschutz-Nachrichten Bayer 54/2001, 3) beschreibt sowohl die biologische Wirkung als auch die Bienensicherheit beim Aufbringen (Applikation) einer Mischung von Oliocin® (eine Winteraustriebspritzungs-Ölformulierung von Bayer CropScience AG) und Confidor® SL 200 (eine insektizide Formulierung der von Bayer CropScience AG) als Tankmischung (Tank-mix).

Zur Vermeidung von Dosierungsfehlern und zur Verbesserung der Sicherheit der Benutzer bei der Anwendung von agrochemischen Produkten ist es jedoch vorteilhaft, die Additive in die Formulierung einzubauen, wie es beispielsweise bei den sogenannten "In-Can-Formulierungen" erfolgt. Weiterhin wird dadurch die unnötige Verwendung von weiterem Verpackungsmaterial für die Produkte bei Verwendung als Tankmischungen vermieden.

Eine entsprechende In-Can Formulierung ist zum Beispiel "Confidor® Oil SC 004" (eine Suspoemulsionsformulierung von Bayer CropScience AG) welche sowohl Imidacloprid als auch ein Mineralöl dispergiert in Wasser enthält. Diese In-Can-Formulierung wird als Dormant-Öl für eine Winterspritzung eingesetzt; der Formuliertyp hat jedoch einige Nachteile.

So ist einerseits die Herstellung dieser Formulierung schwierig und umständlich, weil ein zu hoher Energieeintrag im Produkt schnell zu einem Verquarken führen kann. Bei einem Verquarken wird anstatt einer Öl-in-Wasser-Emulsion eine Wasser-in-Öl-Emulsion gebildet, was zu einem drastischen Anstieg der Viskosität führt. Andererseits wird auch dieses Produkt üblicherweise mit Mengen von 40 und mehr Litern pro Hektar angewendet, was für den Landwirt zu einem höheren Arbeitsaufwand und z.B. erhöhten Transportkosten führt. Ferner führen die hohen Hektaraufwandmengen zu einer gesonderten Umweltbelastung, weil die zu behandelnden Bäume aufgrund fehlender Blätter kaum Haftungsfläche aufweisen, was zu einem so genannten "Run-Off' führt (d.h. das Produkt bleibt nicht haften und läuft runter).

Ein weiterer Nachteil der bekannten In-Can-Formulierungen ist der geringe Bedeckungsgrad der besprühten Pflanze, welcher mit den Formulierungen erreicht wird. Aus der Literatur ist bekannt dass man durch Einsatz von Alkylsiloxanen den Bedeckungsgrad von Pflanzenölen und Mineralölen bzw. Paraffinölen verbessern kann (EP 0 737 420 A). Der Wirkungsmechanismus dieser Additive beruht auf einer Erniedrigung der Oberflächenspannung. Ein Nachteil dieser Alkylsiloxane ist, dass sie nur in einem engen pH-Bereich stabil sind, so dass die Kombinationsmöglichkeiten mit den verschiedensten Wirkstoffen eingeschränkt werden. Darüber hinaus beschreibt die EP 0 737 420 A kein Verfahren, mit dem man Alkylsiloxane und mindestens einen Wirkstoff in nicht gelöster Form in eine Ölphase einarbeiten kann, was erhebliche technische Schwierigkeiten mit sich bringt.

In dem Bericht "Possibilities to use tank-mix adjuvants for better fungicide spreading on triticale ears" von Ryckaert Bert et al. (Database Biosis Biosciences Information Service, Philadelphia, PA, US; Sep. 2008) wird die Verwendung von einem Pflanzenöl (enthaltend Triglyzeride) als Adjuvant in einer Ölformulierung enthalten Propiconazol, Mineralöle und Emulgiermittel offenbart. Die dort beschriebene fungizide Ölformulierung wird zu einer Emulsion mit Wasser verdünnt. Eine insektizide Formulierung auf Basis eines bei Raumtemperatur festen Wirkstoffs wird hingegen nicht offenbart.

Daher besteht weiterhin Bedarf nach Formulierungen, insbesondere Suspensionskonzentraten, welche zur Winterspritzung verwendet werden können und mit welchen die zuvor geschilderten Nachteile des Standes der Technik vermieden werden. Insbesondere soll mit Hilfe der erfindungsgemäßen Formulierungen der Bedeckungsgrad der Pflanzen mit der Formulierung verbessert werden.

Die Aufgabe der vorliegenden Erfindung ist daher die Bereitstellung von Suspensionskonzentraten von agrochemischen Wirkstoffen, welche sich als Winterspritzmittel eignen und bei welchen der Bedeckungsgrad der Pflanzen mit der Formulierung im Vergleich zum Stand der Technik vorzugsweise verbessert ist. Darüber hinaus soll der angestrebte Bedeckungsgrad mit dem Suspensionskonzentrat vorzugsweise bei einer gleichzeitigen Verringerung der Aufwandmengen möglich sein.

Gelöst wird diese Aufgabe durch ein Suspensionskonzentrat, enthaltend die folgenden Bestandteile:
(a) mindestens einen agrochemischen Wirkstoff, dessen Schmelzpunkt oberhalb von 50 °C liegt und die eine insektizide und/oder akarizide Wirkung aufweist;
(b) mindestens ein Öl, ausgewählt aus der Gruppe, bestehend aus Mineralölen und/oder Paraffinölen;
(c) mindestens ein Emulgiermittel und
(d) mindestens ein Triglyzerid,
umfasst, wobei das Triglyzerid auf gesättigten Fettsäuren basiert und die Fettsäure eine Kettenlänge zwischen 6 und 12 C-Atomen aufweist.

Erfindungsgemäß wurde gefunden, dass durch die Verwendung von mindestens einem Triglyzerid in entsprechenden Suspensionskonzentraten agrochemischer Wirkstoffe der Bedeckungsgrad der Pflanze mit der Formulierung verbessert wird.

Es ist als äußerst überraschend zu bezeichnen, dass die erfindungsgemäßen, auf Mineralölen und/oder Paraffinölen basierenden Suspensionskonzentrate den Bedeckungsgrad der besprühten Pflanze signifikant verbessern. Weiterhin war es nicht vorherzusehen dass die Produktaufwandmenge mit den erfindungsgemäßen Formulierungen signifikant reduziert werden konnte bei gleichbleibender und teils sogar besserer biologische Wirkung. In der Patentliteratur ist beschrieben dass durch die Verringerung der Oberflächenspannung durch Zugabe eines Alkylsiloxanes oder eines anderen Spreitmittels ein besseres Spreitverhalten erreicht werden kann. Aus diesem Grund war nicht zu erwarten das die erfindungsgemäßen Triglyzeride der Bedeckungsgrad der besprühten Pflanze signifikant verbessern; die Zugabe der erfindungsgemäßen Triglyzeride bewirkt nur eine geringe Absenkung der Oberflächenspannung, führt aber gleichzeitig zu einem überraschend guten Spreitverhalten der verwendeten Öle.

Zur Verdeutlichung der vorliegenden Erfindung werden im Folgenden zunächst die einzelnen Bestandteile des erfindungsgemäßen Suspensionskonzentrats näher beschrieben:

### Triglyzerid

Die erfindungsgemäßen Suspensionskonzentrate umfassen mindestens ein Triglyzerid als Bestandteil (d) wobei das Triglyzerid auf gesättigten Fettsäuren basiert und die Fettsäure eine Kettenlänge zwischen 6 und 12 C-Atomen aufweist. Das Triglyzerid (IUPAC-Bezeichnung: Triacylglyzerin) bewirkt vorzugsweise einen hohen Bedeckungsgrad des Suspensionskonzentrats auf der zu behandelnden Pflanze. Unter Triglyzeriden werden im Rahmen der vorliegenden Erfindung dreifache Ester des dreiwertigen Alkohols Glycerin mit drei Carbonsäuremolekülen verstanden. Von der vorliegenden Erfindung werden auch Suspensionskonzentrate umfasst, in welchen Glyzeride verwendet werden, in welchen das Glycerin nicht vollständig mit den Fettsäuren umgesetzt wurde und noch freie Hydroxyfunktionen vorliegen. Als Triglyzeride kommen vorzugsweise solche in Frage, die auf fraktionierten pflanzlichen Fettsäuren basieren. Unter dem Begriff "auf Fettsäuren basieren" wird im Rahmen der vorliegenden Erfindung verstanden, dass Triglyzeride verwendet werden, welche durch Umsetzung von Glycerin mit diesen Fettsäuren erhalten werden.

Besonders bevorzugt sind dabei Triglyzeride basierend auf gesättigten Fettsäuren, bei denen der Anteil von Fettsäuren mit eine Kettenlänge zwischen 8 und 10 Kohlenstoffatomen zwischen 90 und 100 % beträgt (bezogen auf das Gewicht der Fettsäuren). Derartige Triglyzeride können dabei sowohl aus Fettsäuren gleicher Kettenlänge (beispielsweise reinsortige Fettsäuretriglyceride wie Glycerintrioctanoat (CAS-Nr. 538-23-8) oder Glycerintridecanoat (CAS-Nr. 621-71-6)) als auch aus allen denkbaren Gemischen von Fettsäuren unterschiedlicher Kettenlänge bestehen.

Ganz besonders bevorzugt sind dabei Triglyzeride, bei denen die verwendeten C₈/C₁₀-Fettsäuren unter den CAS-Nrn. 52622-27-2 oder 73398-61-5 klassifiziert sind.

Entsprechend kommerziell erhältliche Triglyzeride sind Miglyol® 810 oder Miglyol® 812 der Firma SASOL.

Der Gehalt an Triglyzerid kann in den erfindungsgemäßen Suspensionskonzentraten innerhalb eines größeren Bereiches variiert werden.

Der Gehalt an Triglyzerid liegt im Allgemeinen zwischen 0,5 und 10 Gew.-%, vorzugsweise zwischen 1 und 5 Gew.-%, jeweils bezogen auf das erfindungsgemäße Suspensionskonzentrat.

### Agrochemischer Wirkstoff

Das erfindungsgemäße Suspensionskonzentrat enthält mindestens einen festen agrochemischen Wirkstoff als Bestandteil (a).

Unter festen agrochemischen Wirkstoffen sind im vorliegenden Zusammenhang alle zur Pflanzenbehandlung geeigneten Substanzen zu verstehen, deren Schmelzpunkt oberhalb von 50 °C liegt und die eine insektizide und/oder akarizide Wirkung aufweisen.

Geeignete Wirkstoffe sind insbesondere Wirkstoffe aus der Klasse der Neonicotinoide, Pyrethroide, Organophosphate, Carbamate, Anthranilsäureamide und der Ketoenole.

Geeignete Wirkstoffe sind weiterhin 4-Aminobut-2-enolid-Verbindungen, wie sie in EP-A-0 539 588 und WO 2007/115644, WO 2007/115643 und WO 2007/115646 beschrieben sind. Insbesondere 4-{[(6-Chlorpyrid-3-yl)methyl](2,2-difluorethyl)amino}furan-2(5H)-on (Verbindung A), dessen insektizide Wirkung erstmals in WO 2007/115644 beschrieben ist; 4-{[(6-Chlorpyrid-3-yl)methyl](cyclopropyl)amino}furan-2(5H)-on (Verbindung (B)) und 4-{[(6-Chlorpyrid-3-yl)methyl](methyl)amino}furan-2(5H)-on (Verbindung (C)) deren insektizide Wirkung erstmals in EP-A-0 539 588 beschrieben ist. Die Verbindungen lassen sich nach den in WO2007/115644 und EP-A-0539588 beschriebenen Verfahren herstellen und sie besitzen die folgende Struktur:

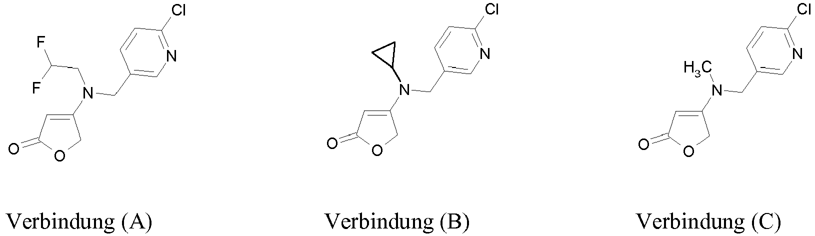

Geeignete Wirkstoffe sind ferner die Sulfoximin-Wirkstoffe wie sie z.B. in US-Patentanmeldung 2005/228027, WO 2006/060029, WO 2008/027073 WO 2007/095229, WO 2007/149134, WO 2008/097235 und WO 2008/207910 beschrieben sind, insbesondere
6-Chlor-pyridin-3-yl]ethyl](methyl)oxido-λA-sulfanyliden-cyanamid der Formel 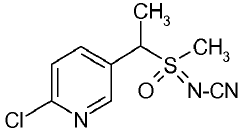 bekannt aus US-Patentanmeldung 2005/228027 A1, WO 2006/060029, und die Diastereomere davon
Verbindung (D) bzw. Verbindung (E) der Formel 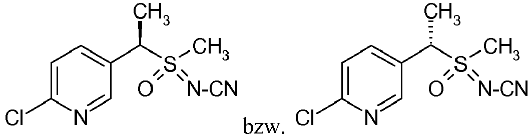 bekannt aus US-Patentanmeldung 2005/228027 A1 und WO 2007/149134,
[6-Trifluormethyl-pyridin-3-yl]ethyl](methyl)oxido-λA-sulfanyliden-cyanamid (Sulfoxaflor) (Verbindung (F)): 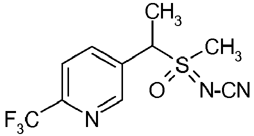 bekannt aus WO 2007/095229, WO 2007/149134, WO 2008/097235 und WO 2008/207910,
*N*-[Tetrahydro-1-oxido-2-[6-(trifluormethyl)-3-pyridinyl)-1*H*-1λ4-thien-1-yliden]-cyanamid (Verbindung (G)) 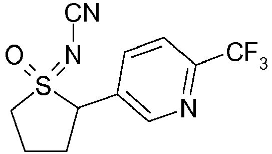 bekannt aus WO 2007/095229 A2, und
*N*-[2-(6-Chlor-3-pyridinyl)tetrahydro-1-oxido-1*H*-1-λ4-thien-1-yliden]-cyanamid (Verbindung (H)) 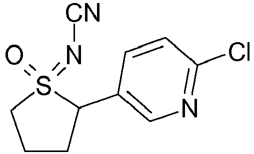 bekannt aus WO 2009/134224 A1

Besonders bevorzugt genannt seien Chlorantraniliprole (*Rynaxypyr*)*,* Cyazypyr, Imidacloprid, Thiamethoxam, Clothianidin, Dinotefuran, Thiacloprid, Acetamiprid, Deltamethrin, beta-Cyfluthrin, Transfluthrin, Endosulfan, Sulfoxaflor und Spirotetramat, sowie Verbindung (A).

Ganz besonders bevorzugt genannt seien Imidacloprid, Thiamethoxam, Clothianidin, Thiacloprid, Acetamiprid und Verbindung (A).

Der Gehalt an agrochemischen Wirkstoff kann in den erfindungsgemäßen Suspensionskonzentraten innerhalb eines größeren Bereiches variiert werden.

Der Gehalt an agrochemischem Wirkstoff liegt im Allgemeinen zwischen 0,1 und 5 Gew.-%, vorzugsweise zwischen 0,2 und 2 Gew.-%, jeweils bezogen auf das erfindungsgemäße Suspensionskonzentrat.

### Pflanzenöl, Mineralöl und/oder Paraffinöl

Das erfindungsgemäße Suspensionskonzentrat wird vorzugsweise zur Winterspritzung eingesetzt und enthält daher mindestens ein Öl als Bestandteil (b). Bei diesem mindestens einen Öl kann es sich um ein Mineralöl und/oder Paraffinöl handeln. Zusätzlich kann das erfindungsgemäße Suspensionskonzentrat noch ein Pflanzenöl enthalten. Die einzelnen Öle werden im Folgenden näher beschrieben.

Als Pflanzenöle kommen alle üblicherweise für agrochemische Zwecke einsetzbare, aus Pflanzen gewinnbare Öle und Gemische dieser Öle in Frage. Beispielhaft genannt seien Sojabohnenöl, Rapsöl, Maiskeimöl, Maiskernöl, Sonnenblumenöl, Baumwollsaatöl, Leinöl, Distelöl, Walnussöl, Erdnussöl, Olivenöl, Rüböl oder Rizinusöl. Insbesondere werden Sojabohnenöl, Rapsöl, Maiskeimöl oder Sonnenblumenöl und deren Mischungen bevorzugt.

Als Mineralöle kommen verschiedene kommerziell erhältliche Destillationsfraktionen von Erdöl (Petroleum) in Frage. Bevorzugt sind Mischungen von offenkettigen C₁₄C₃₀-Kohlenwasserstoffen, geschlossenkettigen Kohlenwasserstoffen (Naphthene) und aromatischen Kohlenwasserstoffen. Die Kohlenwasserstoffe können sowohl linear als auch verzweigt sein. Besonders bevorzugt sind Mischungen, die einen nicht aromatischen Anteil kleiner als 8 Gew.-% vorweisen. Ganz besonders bevorzugt sind Mischungen, die einen nicht-aromatischen Anteil kleiner als 4 Gew.-% vorweisen. Beispielhaft sei hier Exxsol® D140 genannt.

Als Paraffinöle kommen lineare, verzweigte und cyclische C₁₄C₃₀-Kohlenwasserstoffe sowie deren Mischungen in Frage. Paraffinöle sind auch bekannt als Baseöle oder Weissöle. und sind kommerziell in unterschiedlichen Qualitäten erhältlich. Beispielhaft genannt seien hier Paraffinöle mit den CAS-Nummern 8042-47-5 (z.B. Marcol® 82, ExxonMobil, Belgien; Pionier 0032-20, Hansen & Rosenthal KG, Hamburg, Deutschland; Kristol M14, Carless, Surrey, England; Ondina® 917, 927, 929, Shell), 64742-46-7 (z.B. Exxsol D130, ExxonMobil; Banole 50 ; Total, Frankreich), 72623-86-0 (z.B. Genera-12; Total), CAS 97862-82-3 (z.B. Genera-9; Total), 92062-35-6 (z.B. BAR 0020, R.A.M. Oil), 64742-55-8 (z.B. Flavex® 909, 913, 921, Shell), 64742-54-7 (z.B. Catenex® T121, Shell), 64742-79-6 (z.B. Risella® 907, Shell), 64742-65-0 (z.B. Catenex® S920, Shell), 64741-88-4, 64741-89-5, 64741-97-5 oder 8012-95-1.

Vorzugsweise werden nur Mineralöle oder Paraffinöle verwendet.

Besonders bevorzugt werden Paraffinöle verwendet.

Der Gehalt an Pflanzenöl, Mineralöl und/oder Paraffinöl kann in den erfindungsgemäßen Suspensionskonzentraten innerhalb eines größeren Bereiches variiert werden.

Der Gehalt an agrochemischem Wirkstoff liegt im Allgemeinen zwischen 50 und 95 Gew.-%, vorzugsweise zwischen 65 und 90 Gew.-%, jeweils bezogen auf das erfindungsgemäße Suspensionskonzentrat.

### Emulgator

Das erfindungsgemäße Suspensionskonzentrat enthält mindestens einen Emulgator als Bestandteil (c).

Bevorzugte Emulgatoren sind ethoxylierte Nonylphenole, Umsetzungsprodukte von Alkylphenolen mit Ethylenoxid und/oder Propylenoxid, ethoxylierte Arylalkylphenole, weiterhin ethoxylierte und propoxylierte Arylalkylphenole, sowie sulfatierte oder phosphatierte Arylalkylethoxylate bzw. -ethoxy-propoxylate, wobei Sorbitan-Derivate, wie Polyethylenoxid-Sorbitan-Fettsäureester und Sorbitan-Fettsäureester, beispielhaft genannt seien.

Der Gehalt an Emulgator kann in den erfindungsgemäßen Suspensionskonzentraten innerhalb eines größeren Bereiches variiert werden.

Der Gehalt an Emulgator liegt im Allgemeinen zwischen 1 und 10 Gew.-%, vorzugsweise zwischen 2 und 7,5 Gew.-%, jeweils bezogen auf das erfindungsgemäße Suspensionskonzentrat.

### Weitere optionale Bestandteile

Als Zusatzstoffe, die in dem erfindungsgemäßen Suspensionskonzentrat enthalten sein können, kommen Dispergiermittel, Frostschutzmittel, schaumhemmenden Mittel, Konservierungsmittel, Antioxydantien, Spreitmittel, Wasser und Verdicker in Betracht.

Bevorzugte Dispergiermittel sind ausgewählte nicht-ionische und / oder anionische Tenside.

Als nicht-ionische Tenside kommen alle üblicherweise in agrochemischen Mitteln einsetzbaren Stoffe dieses Typs in Betracht. Vorzugsweise genannt seien Polyethylenoxid-polypropylenoxid-Blockcopolymere, Polyethylenglykolether von linearen oder verzweigten Alkoholen, Umsetzungsprodukte von Fettsäuren mit Ethylenoxid und/oder Propylenoxid, ferner Polyvinylalkohol, Polyvinylpyrrolidon, Mischpolymerisate aus Polyvinylalkohol und Polyvinylpyrrolidon sowie Copolymerisate aus (Meth)acrylsäure und (Meth)acrylsäureestern, weiterhin Alkylethoxylate und Alkylarylethoxylate, die gegebenenfalls phosphatiert und gegebenenfalls mit Basen neutralisiert sein können, wobei Sorbitolethoxylate beispielhaft genannt seien.

Als anionische Tenside kommen alle üblicherweise in agrochemischen Mitteln einsetzbaren Substanzen dieses Typs in Frage. Bevorzugt sind Ammonium-, Alkalimetall- und ErdalkalimetallSalze von Alkylsulfonsäuren oder Alkylarylsulfonsäuren, und phosphatierten oder sulfatierten Alkylarylethoxylaten.

Eine weitere bevorzugte Gruppe von anionischen Tensiden bzw. Dispergierhilfsmitteln sind in Öl wenig lösliche Salze von Polystyrolsulfonsäuren, Salze von Polyvinylsulfonsäuren, Salze von Naphthalinsulfonsäure-Formaldehyd-Kondensationsprodukten, Salze von Kondensationsprodukten aus Naphthalinsulfonsäure, Phenolsulfonsäure und Formaldehyd sowie Salze von Ligninsulfonsäure.

Als Frostschutzmittel kommen alle üblicherweise in agrochemischen Mitteln einsetzbaren Substanzen dieses Typs in Frage. Bevorzugt sind Harnstoff, Glycerin oder Propylenglykol.

Als schaumhemmende Stoffe kommen alle üblicherweise für diesen Zweck in agrochemischen Mitteln einsetzbaren Substanzen in Betracht. Bevorzugt sind Silikonöle und Magnesiumstearat.

Als Antioxidantien kommen alle üblicherweise für diesen Zweck in agrochemischen Mitteln einsetzbaren Substanzen in Betracht. Bevorzugt ist Butylhydroxytoluol (2,6-di-t-butyl-4-methylphenol, BHT).

Als Konservierungsmittel kommen alle üblicherweise für diesen Zweck in agrochemischen Mitteln dieses Typs einsetzbaren Substanzen in Frage. Als Beispiele genannt seien 2-Methylisothiazolinonderivate (z.B. Preventol®, Fa. Lanxess) und 1,2-Benzoisothiazol-3-one (z.B. Proxel®).

Als Spreitmittel kommen alle üblicherweise für diesen Zweck in agrochemischen Mitteln einsetzbaren Substanzen in Betracht. Bevorzugt sind Polyether-Polysiloxane oder organo-modifizierte Polysiloxane.

Als Verdicker kommen alle üblicherweise für diesen Zweck in agrochemischen Mitteln einsetzbare Substanzen in Betracht, die als Verdickungsmittel fungieren. Bevorzugt sind anorganische Partikel, wie Carbonate, Silikate und Oxide, sowie auch organische Substanzen, wie Harnstoff-Formaldehyd-Kondensate. Beispielhaft erwähnt seien Kaolin, Rutil, Siliciumdioxid, sogenannte hochdisperse Kieselsäuren, Kieselgele, sowie natürliche und synthetische Silikate wie Bentonite, Attapulgite oder Montmorillite, außerdem Talkum.

Der Gehalt an diesen weiteren Zusatzstoffen kann in den erfindungsgemäßen Suspensionskonzentraten jeweils innerhalb eines größeren Bereiches variiert werden.

Wenn die erfindungsgemäßen Suspensionskonzentraten weitere Zusatzstoffe enthalten, so kann der Gehalt an den weiteren Zusatzstoffen jeweils im Allgemeinen zwischen 0 und 15 Gew.-%, vorzugsweise zwischen 0 und 10 Gew.-%, jeweils bezogen auf das erfindungsgemäße Suspensionskonzentrat, liegen.

### Weitere Eigenschaften der erfindungsgemäßen Suspensionskonzentrate

Bei den erfindungsgemäßen Suspensionskonzentraten auf Ölbasis handelt es sich um Formulierungen, die auch nach längerer Lagerung bei erhöhten Temperaturen oder in der Kälte stabil bleiben, da kein Kristallwachstum beobachtet wird. Sie lassen sich durch Verdünnen mit Wasser in homogene Spritzflüssigkeiten überführen. Die Anwendung dieser Spritzflüssigkeiten erfolgt nach üblichen Methoden, also zum Beispiel durch Verspritzen.

### Verwendung der erfindungsgemäßen Suspensionskonzentrate

Weiterer Gegenstand der vorliegenden Erfindung ist die Verwendung der erfindungsgemäßen Suspensionskonzentrate zur Applikation von agrochemischen Wirkstoffen.

Insbesondere wird das erfindungsgemäße Suspensionskonzentrat als Winterspritzmittel für Obstbäume eingesetzt. Dabei wirkt das als Bestandteil (b) eingesetzte Mineralöl und/oder Paraffinöl in Kombination mit dem mindestens einen agrochemischen Wirkstoff (Bestandteil (a)).

Die Aufwandmenge an den erfindungsgemäßen Suspensionskonzentraten auf Ölbasis kann innerhalb eines größeren Bereiches variiert werden. Sie richtet sich nach den jeweiligen agrochemischen Wirkstoffen und nach deren Gehalt in den Formulierungen, welche vorstehend für die einzelnen Bestandteile angegeben wurden.

### Herstellung der erfindungsgemäßen Suspensionskonzentrate

Weiterer Gegenstand der vorliegenden Erfindung ist ein Verfahren zur Herstellung der erfindungsgemäßen Suspensionskonzentrate.

Die Herstellung der erfindungsgemäßen Suspensionskonzentrate erfolgt vorzugsweise in der Weise, dass man die einzelnen Komponenten in den jeweils gewünschten Verhältnissen miteinander vermischt. Die Reihenfolge, in der die Bestandteile miteinander vermengt werden, ist beliebig. Zweckmäßigerweise setzt man die festen Komponenten in feingemahlenem Zustand ein; dabei liegt die Teilchengröße im Allgemeinen unterhalb von 20 µm, bevorzugt zwischen 1 und 10 µm. Beim Einsetzen der festen Komponenten in feingemahlenem Zustand wird üblicherweise der Wirkstoff über eine Luftstrahlmühle zerkleinert, wobei der Wirkstoff in reiner Form oder in Kombination mit einem Mahlhilfsmittel vorliegt. Alternativ kann man auch den Wirkstoff über eine Naßmahlung in Form einer hoch konzentrierten Suspension einarbeiten. Es ist aber auch möglich, die nach dem Vermengen der Bestandteile entstehende Suspension zunächst einer Grob- und dann einer Feinmahlung zu unterziehen, so dass die mittlere Teilchengröße unterhalb von 20 µm liegt. Bevorzugt sind Suspensionskonzentrate, in denen die festen Partikel eine mittlere Teilchengröße zwischen 1 und 10 µm aufweisen. Zur Erhöhung der Effektivität der Mahlung kann man ein Teil der kontinuierlichen Phase frei lassen und erst nach der Zerkleinerung zugeben.

Die Temperaturen können bei der Durchführung des erfindungsgemäßen Verfahrens in einem bestimmten Bereich variiert werden. Man arbeitet im Allgemeinen bei Temperaturen zwischen 10 und 60 °C, vorzugsweise zwischen 15 und 40 °C. Zur Durchführung des erfindungsgemäßen Verfahrens kommen übliche Misch- und Mahlgeräte in Betracht, die zur Herstellung von agrochemischen Formulierungen eingesetzt werden.

### Verwendung

Weiterer Gegenstand der vorliegenden Erfindung ist die Verwendung von mindestens einem Triglyzerid zur Verbesserung des Bedeckungsgrad von agrochemischen Wirkstoffen. Das erfindungsgemäß zu verwendende Triglyzerid findet vorzugsweise Anwendung in Suspensionskonzentraten, welche zur Winterspritzung eingesetzt werden. Die entsprechenden Suspensionskonzentrate können mindestens einen agrochemischen Wirkstoff umfassen. Für weitere Ausführungen zu entsprechenden Suspensionskonzentraten wird auf obige Ausführungen verwiesen.

Hinsichtlich besonderer Ausgestaltungen bezüglich des Triglyzerids wird ebenfalls auf obige Ausführungen verwiesen.

Die vorliegende Erfindung wird anhand der nachfolgenden Beispiele näher erläutert.

### Herstellungsbeispiele

### Beispiel 1

Zur Herstellung eines erfindungsgemäßen Suspensionskonzentrates wurden

| | | |
|---|---|---|
| 6,0 | g | Imidacloprid |
| 42,5 | g | Atlox 3467 |
| 42,5 | g | Arlatone T(V) |
| 1,7 | g | Miglyol 812 N (erfindungsgemäß zu verwendendes Triglyzerid) |
| 0,8 | g | Silfoam SC 1132 |
| 1,7 | g | Vulkanox BHT |
| 1,7 | g | Aerosil R 812 S |

unter Rühren bei Raumtemperatur in

| | | |
|---|---|---|
| 722,5 | g | Pionier 0032-20 |

gegeben. Nach beendeter Zugabe wurde noch 10 Minuten bei Raumtemperatur nachgerührt. Die dabei entstehende homogene Suspension wurde zunächst einer Grob- und dann einer Feinmahlung unterworfen, so dass eine Suspension erhalten wird, in der 90 % der Feststoffpartikel eine Teilchengröße unter 6 µm aufwies.

Analog zu Beispiel 1 wurden folgende Formulierungen 2 bis 28 mit anderen agrochemischen Wirkstoffen hergestellt (Angaben in %w/w):

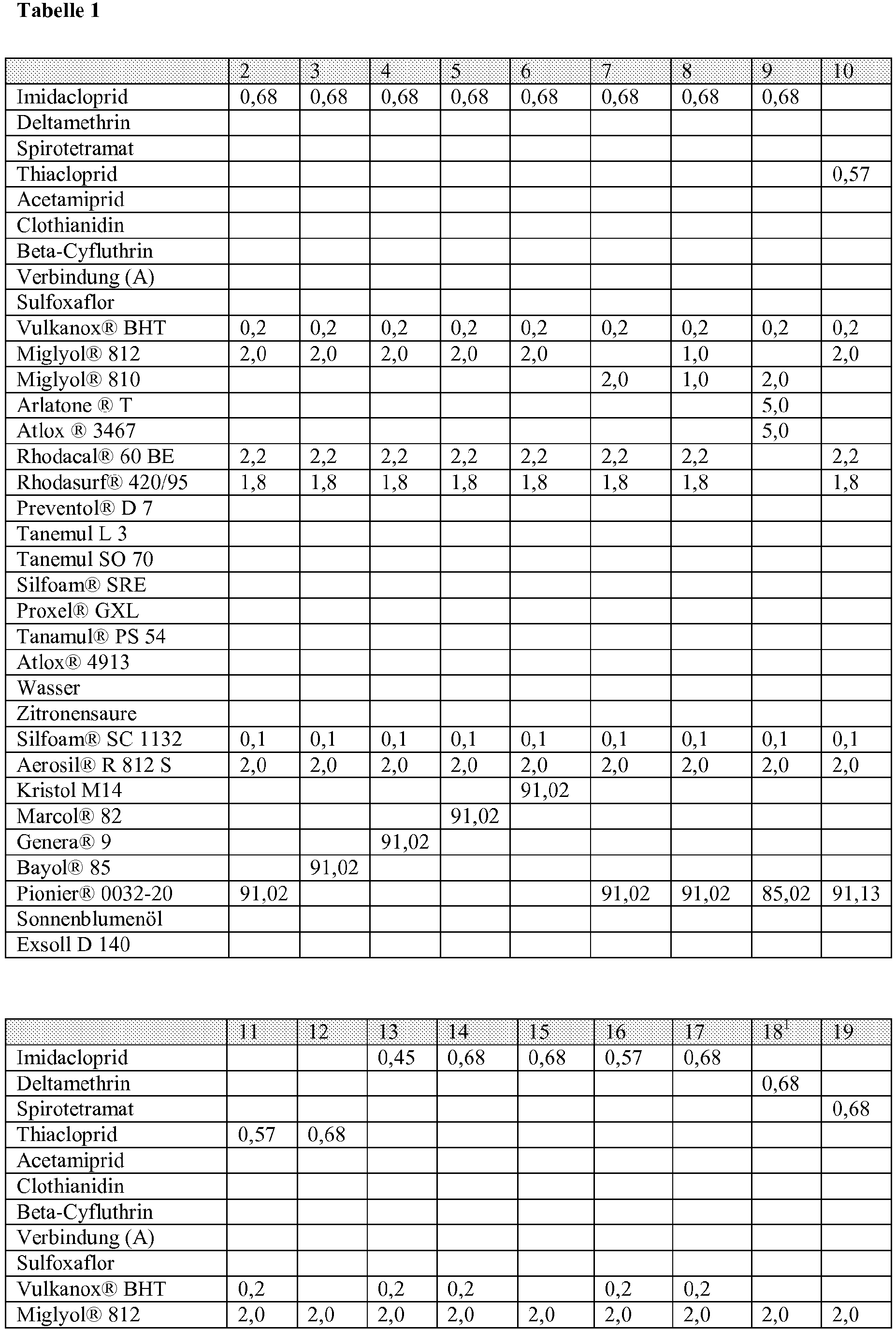

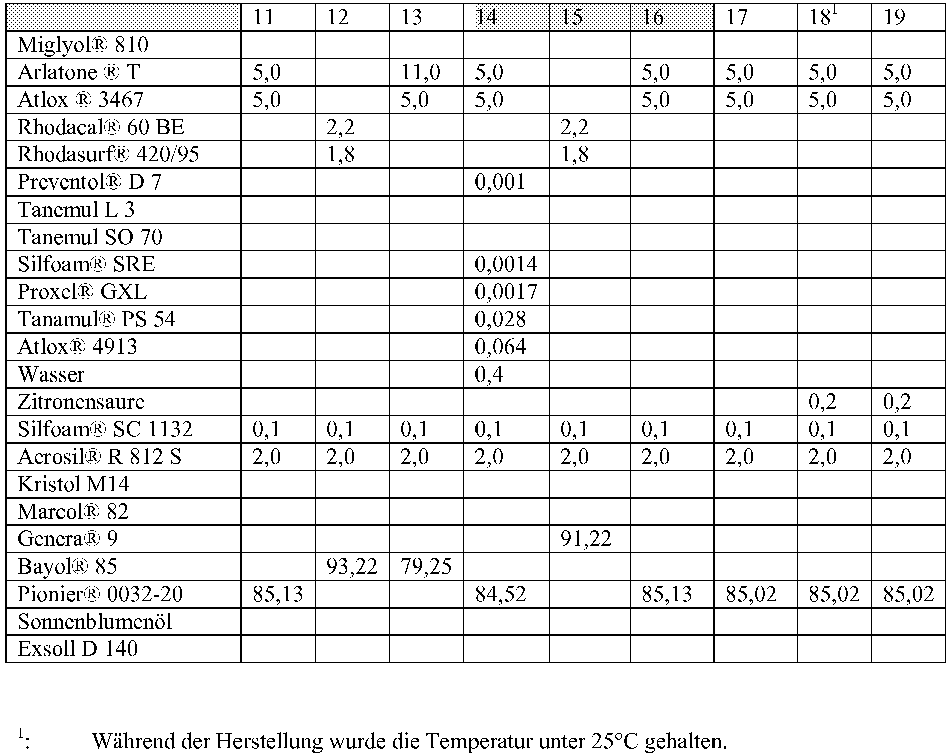

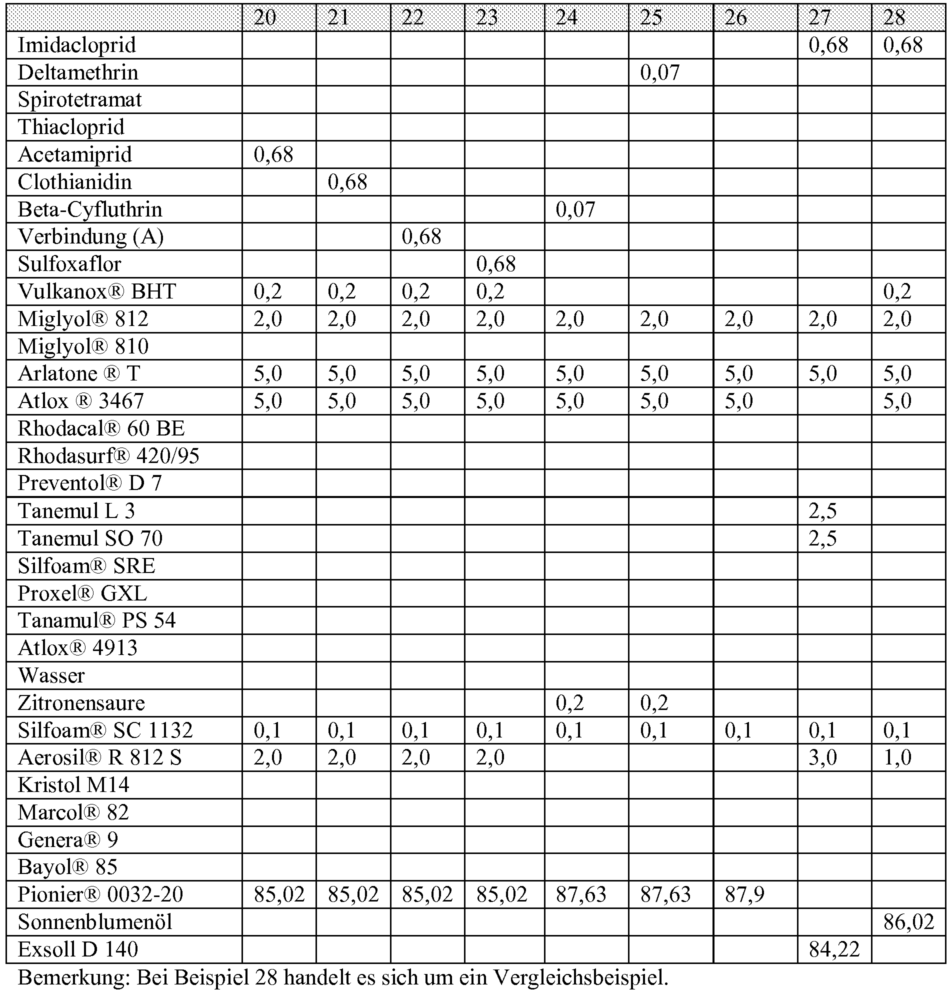

### Vergleichsbeispiel 1

Zur Herstellung eines Suspensionskonzentrates wurden

| | | |
|---|---|---|
| 2.7 | g | Imidacloprid |
| 34.1 | g | Atlox 3467 |
| 68.2 | g | Arlatone T(V) |
| 12 | g | Break Thru OE 441 (Adjuvanz zur Verbesserung des Bedeckungsgrad) |
| 0,7 | g | Silfoam SC 1132 |
| 1,4 | g | Vulkanox BHT |
| 12 | g | Aerosil R 812 S |

unter Rühren bei Raumtemperatur in

| | | |
|---|---|---|
| 467,3 | g | Bayol 85 |

gegeben. Nach beendeter Zugabe wurde noch 10 Minuten bei Raumtemperatur nachgerührt. Die dabei entstehende homogene Suspension wurde zunächst einer Grob- und dann einer Feinmahlung unterworfen, so dass eine Suspension erhalten wurde, in der 90 % der Feststoffpartikel eine Teilchengröße unter 6 µm aufwies.

### Vergleichsbeispiel 2

Zur Herstellung eines Suspensionskonzentrates wurden

| | | |
|---|---|---|
| 2.7 | g | Imidacloprid |
| 34.1 | g | Atlox 3467 |
| 68.2 | g | Arlatone T(V) |
| 12 | g | Surfonyl 104 S (Adjuvanz zur Verbesserung des Bedeckungsgrad) |
| 0,7 | g | Silfoam SC 1132 |
| 1,4 | g | Vulkanox BHT |
| 12 | g | Aerosil R 812 S |

unter Rühren bei Raumtemperatur in

| | | |
|---|---|---|
| 479,3 | g | Bayol 85 |

gegeben. Nach beendeter Zugabe wurde noch 10 Minuten bei Raumtemperatur nachgerührt. Die dabei entstehende homogene Suspension wurde zunächst einer Grob- und dann einer Feinmahlung unterworfen, so dass eine Suspension erhalten wird, in der 90 % der Feststoffpartikel eine Teilchengröße unter 6 µm aufwies.

Die durch ihre Handelsnamen definierten Komponenten der zuvor beschriebenen Zusammensetzungen sind bei folgenden Lieferanten erhältlich:

| **Handelsname** | **Verbindungstyp** | **Lieferant** |
|---|---|---|
| Aerosil® R 812 S | Hydrophobiertes hochdisperses Siliziumdioxid | Evonik Degussa |
| Arlatone® ® T | PEG-40 Sorbitanperoleat, nicht-ionisch | Croda |
| Atlox ® 3467 | Mischung nichtionischer und anionischer Tenside | Croda |
| Atlox® 4913 | Polymeres nichtionisches Tensid | Croda |
| Bayol® 85 | Weißöl | Exxon Mobil |
| Break Thru® OE 441 | Polyethersiloxan | Evonik |
| Exsoll® D 140 | Kohlenwasserstofffluid | Exxon Mobil |
| Genera® 9 | Weißöl | Total |
| Kristol® M14 | Weißöl | Carless |
| Marcol® 82 | Weißöl | Exxon Mobil |
| Miglyol® 810 | Caprylic/Capric Triglycerid | Sasol |
| Miglyol® 812 | Caprylic/Capric Triglycerid | Sasol |
| Pionier® 0032-20 | Weißöl | Hansen & Rosenthal KG |
| Preventol® D 7 | 5-Chloro-2-methyl-3(2H)-isothiazolon + 2-Methyl-3 (2H)- isothiazolon | Lanxess |
| Proxel® GXL | 1,2-benzisothiazol- 3 (2H)-on | ARCH Chemicals |
| Rhodacal® 60 BE | Calciumdodecylbenzensulfonat | Rhodia |
| Rhodasurf® 420/95 | Ethoxylierter Fettalkohol | Rhodia |
| Silfoam® SC 1132 | Polydimethysiloxan | Wacker |
| Surfonyl® 104 S | 2,4,7,9-Tetramethyl-5-decin-4,7-diol | Air Products |
| Tanemul® L 3 | Ethoxylierter Fettalkohol | Tanatex |
| Tanamul® PS 54 | Tristerylphenolethoxylat | Tanatex |
| Tanemul® SO 70 | Fettsäurepoly(ethylenglykol)ether | Tanatex |
| Vulkanox® BHT | 2,6-Di-tert.-butyl-4-methylphenol | Lanxess |

### Anwendungsbeispiele

Als Standard wird die kommerziell erhältliche ölhaltige Formulierung mit dem Handelsnamen "Confidor Oil SC 004" eingesetzt. Bei dieser Formulierung handelt es sich um ein Suspensionskonzentrat des Wirkstoffs Imidacloprid, welches sich aus dem Wirkstoff, einem Öl sowie weiteren Hilfsstoffen zusammensetzt, aber - im Gegensatz zu den erfindungsgemäßen Formulierungen - kein Triglyzerid enthält.

### Beispiel I

### Bedeckung von Pflanzenteilen nach Spritzapplikation

Zur Bestimmung des Bedeckungsgrades von Knospen und Zweigen nach Applikation verschiedener den Wirkstoff Imidacloprid enthaltender, ölbasierter Formulierungen wurden standardisierte Laborversuche durchgeführt. Dazu wurden die entsprechenden ölbasierten Formulierungen in gleicher Anwendungskonzentration (40g a.i./ha) unter Zuhilfenahme von Fluoreszenz-Markern aus der Gruppe der Stilbenderivate auf Pflanzenteile appliziert und anschließend der Bedeckungsgrad bestimmt.

Die Spritzversuche wurden mit einer Laborsprüheinrichtung (CheckTec) durchgeführt, welche feldanaloge Spritzungen mit praxisüblichen Düsen, Wasservolumina und Drücken erlaubt. Dabei wurde stets ein Wasseraufwand von 500 Liter je Hektar appliziert und der Spritzkopf war stets mit einer Flachstrahldüse bestückt. Die Pflanzenteile waren Knospen bzw. Zweige von Apfel (Sorte Golden Delicious) und Süßkirsche (Sorte Sunburst). Die Äste wurden zum Erhalt der Turgeszens unter Wasser geschnitten und bis zur Applikation in Leitungswasser stehend bewahrt. Die Orientierung der Zweige bei der Spritzapplikation war stets senkrecht zur Richtung des Spritznebels. Bei den Knospen war entweder die Seite oder die Spitze der Knospen dem Spritznebel zugewandt.

Die Präparate wurden in Leitungswasser angesetzt und vor Applikation für mindestens eine halbe Stunde mit einem Magnetrührer durchmischt.

Nach Applikation wurde bis zur Verdunstung der Spritzbrühe gewartet, d.h. bis die Pflanzenteile makroskopisch trocken waren. Zur Auswertung wurden die Pflanzenproben im UV Licht in einer abgeschirmten CAMAG Box analysiert. Je nach Eigenfluoreszens der Pflanzen(teile) relativ zum Fluoreszens-Marker wurden dabei Wellenlängen von (überwiegend) 354 nm oder 302 nm zur Anregung verwendet und digitale Aufnahmen mit einer Sony DSC H-9 gemacht. Dabei wurde jeweils eine behandelte Pflanzenprobe mit einer unbehandelten Probe zusammen fotografiert, da die unbehandelte Kontrolle zur nachfolgenden Auswertung und Berücksichtigung des Hintergrundsignals diente. Die Auswertung des Bedeckungsgrades erfolgte mittels der Bildauswerte-Software Soft-Imaging-Systems (SIS, V5.0). Dazu wurden die Bilder in den Arbeitsspeicher geladen und ein Farbauszug vorgenommen. Nach der Graustufenumwandlung des UV-Emissions-Bildes wurde ein Schwellenwert für die Helligkeit detektiert, der die unbehandelte Pflanzenprobe voll abdeckte. Alle Pflanzenteile bis zu diesem Schwellenwert bekommen eine einheitliche Falschfarbe und beschreiben in der behandelten Pflanzenprobe den nicht bedeckten Anteil. Über dem Schwellenwert liegende Intensitäten werden dem bedeckten Anteil zugeordnet. Das zu untersuchende Pflanzenorgan (Knospe, Zweigstück) wurde dann bildanalytisch ausgeschnitten und der prozentuale Bedeckungsgrad wie per SIS berechnet, dokumentiert.

| **Produkt** | Bedeckung Apfelknospen |
|---|---|
| Tabelle 1, Beispiel 13, 10 L / ha | 80% |
| Vergleichsbeispiel 1, 10 L / ha | 70% |
| Vergleichsbeispiel 2, 10 L / ha | 70% |
| Kommerzieller Standard (Confidor Oil SC 004), 10L / ha | 70% |

Beispiel 13 aus Tabelle 1 zeigte bei gleichen Aufwandmengen einen gegenüber dem Standard verbesserten Bedeckungsgrad auf Apfelknospen im Vergleich zum kommerziellen Standard Confidor Oil SC 004 und weiteren Testpräparaten (Vergleichsbeispiele 1 und 29.

### Beispiel II

### Wirksamkeit gegen Populationen der Mandel- oder Maulbeerschildlaus nach Spritzapplikation

In Izmir (Türkei) wurden Pfirsichbäume, die naturgemäß mit der Maulbeerschildlaus ***Pseudaulacaspis pentagona*** infiziert sind, einmal mit EINER Formulierung gemäß Beispiel 1 aus Tabelle 1 (162 g Imidacloprid/ha bzw. 27 L Produkt) bzw. mit Beispiel 12 aus Tabelle 1 (180 g Thiacloprid/ha bzw. 30 L Produkt) bzw. mit Beispiel 16 aus Tabelle 1 (160 g Imidacloprid/ha bzw. 32 L Produkt) als Austriebsspritzung besprüht. 25 und 50 Tage nach der Behandlung (25 bzw. 50 DAA) wurde die Wirksamkeit der Behandlung gegen die Maulbeerschildlaus in % Abbott (Verhältnis der Anzahl von Maulbeerschildläusen auf behandelter Pflanze / Trieb zur Anzahl von Maulbeerschildläusen auf Kontrolle) in % Abbott (Mass für Wirksamkeit: % Lebende Schildläuse Kontrolle - Lebende Schildläuse nach Behandlung / Lebende Schildläuse in der Kontrolle) bestimmt, und mit dem kommerziellen Standard Confidor Oil SC 004 (160 g Imidacloprid/ha bzw. 40 L Produkt) verglichen.

| | **Wirksamkeit gegen Maulbeerschildläuse** | |
|---|---|---|
| | **[% Abbott]** | |
| **Produkt** | **25 DAA** | **50 DAA** |
| Kommerzieller Standart (Confidor Oil SC 004), 40 L / ha | 89,8 | 96 |
| Tabelle 1, Beispiel 1, 27 L / ha | 100 | 100 |
| Tabelle 1, Beispiel 16, 32 L / ha | 100 | 100 |
| Tabelle 1, Beispiel 12, 30 L / ha | 93,3 | 97,4 |

Trotz niedrigerem Ölgehaltes zeigte Beispiel 1 aus Tabelle 1 mit 27 L Produkt/ha eine schnellere Wirksamkeit (25 DAA) gegen die Maulbeerschildlaus als der Standard Confidor Oil SC 004 mit 40 L Produkt/ha. Auch die Langzeitkontrolle nach 50 DAA lag geringfügig über der des Standardpräparates.

### Beispiel III

### Wirksamkeit gegen Populationen der mehligen Apfelblattlaus nach Spritzapplikation

In Bologna (Italien) wurden Apfelbäume, bei der ein Befall mit der mehligen Apfelblattlaus Dysaphis plantaginea erfahrungsgemäß erwartet werden kann, einmal mit Beispiel 1 aus Tabelle 1 (54 g Imidacloprid / ha und m Kronenhöhe = 162 g Imidacloprid / ha bzw. 27 L Produkt) als Austriebsspritzung besprüht. 83 Tage nach der Behandlung (83 DAA) wurde die Wirksamkeit der Behandlung gegen die mehligen Apfelblattläuse in % Abbott (Verhältnis der Anzahl von Apfelblattläusen auf behandelter Pflanze / 20 Triebe zur Anzahl von Apfelblattläusen auf Kontrolle) in % Abbott (Mass für Wirksamkeit: % Lebende Apfelblattläuse Kontrolle - Lebende Apfelblattläuse nach Behandlung / Lebende Apfelblattläuse in der Kontrolle) bestimmt, und mit dem kommerziellen Standard Confidor Oil SC 004 (162 g Imidacloprid / ha bzw. 40 L Produkt) verglichen.

| | **Wirksamkeit gegen mehlige Apfelblattläuse** | |
|---|---|---|
| **Produkt** | **Konz. [g a.i./ha m Kronenhöhe]** | **83 DAA [% Abbott]** |
| Mineralöl, 40 L / ha | 0 | 33,7 |
| Kommerzieller Standart (Confidor Oil SC 004), 40 L / ha | 54 | 80,8 |
| Tabelle 1, Beispiel 1, 27 L / ha | 54 | 84,3 |

Beispiel 1 aus Tabelle 1 zeigte bei gleichem Gehalt an a.i. eine gegenüber dem Standard leicht verbesserte Wirksamkeit gegen die mehlige Apfelblattlaus als der Standard Confidor Oil SC 004 und weitere Testpräparate. Hierbei handelt es sich um eine Langzeitkontrolle nach 83 DAA.

Das pure Mineralöl vermag nur einen geringen Beitrag zur Kontrolle dieses Schädlings zu leisten (34 % Abbot), und nur die erfindungsgemäße Formulierung konnte diese hohen Wirkungsgrade erzielen.

## Patentansprüche

1. Suspensionskonzentrat, enthaltend die folgenden Bestandteile:
(a) mindestens einen agrochemischen Wirkstoff, dessen Schmelzpunkt oberhalb von 50 °C liegt und der eine insektizide und/oder akarizide Wirkung aufweist;
(b) mindestens ein Öl, ausgewählt aus der Gruppe bestehend aus Mineralölen und/oder Paraffinölen;
(c) mindestens ein Emulgiermittel; und
(d) mindestens ein Triglyzerid,
wobei das Triglyzerid auf gesättigten Fettsäuren basiert und die Fettsäure eine Kettenlänge zwischen 6 und 12 C-Atomen aufweist.

2. Suspensionskonzentrat nach Anspruch 1, **dadurch gekennzeichnet, dass** das Triglyzerid auf Fettsäuren basiert, wobei der Anteil von Fettsäuren mit eine Kettenlänge zwischen 8 und 10 Kohlenstoffatomen an den in dem Triglyzerid verwendeten Fettsäuren zwischen 90 und 100 % liegt.

3. Suspensionskonzentrate nach einem der Ansprüche 1 bis 2, **dadurch gekennzeichnet, dass** das Triglyzerid Glycerintrioctanoat oder Glycerintridecanoat ist.

4. Suspensionskonzentrat nach einem der Ansprüche 1 bis 3, **dadurch gekennzeichnet, dass** der Gehalt des Triglyzerids in dem Suspensionskonzentrat 0,5 bis 10 Gew.-%, bezogen auf das Suspensionskonzentrat, beträgt.

5. Suspensionskonzentrat nach einem der Ansprüche 1 bis 4, **dadurch gekennzeichnet, dass** der agrochemische Wirkstoff ausgewählt ist aus der Gruppe, bestehend aus Neonicotinoiden, Pyrethroiden, Organophosphaten, Carbamaten, 4-Aminobut-2-enolid-Verbindungen, Sulfoximin-Verbindungen und Ketoenolen.

6. Suspensionskonzentrat nach einem der Ansprüche 1 bis 5, **dadurch gekennzeichnet, dass** der agrochemische Wirkstoff ausgewählt ist aus der Gruppe, bestehend aus Imidacloprid, Thiamethoxam, Clothianidin, Dinotefuran, Thiacloprid, Acetamiprid, Deltamethrin, beta-Cyfluthrin, Endosulfan, 4-{[(6-Chlorpyrid-3-yl)methyl](2,2-difluorethyl)amino }furan-2(5H)-on (Verbindung A), Sulfoxaflor und Spirotetramat.

7. Suspensionskonzentrat nach einem der Ansprüche 1 bis 6, **dadurch gekennzeichnet, dass** der Gehalt an agrochemischem Wirkstoff 0,1 bis 5 Gew.-%, jeweils bezogen auf das Suspensionskonzentrat, beträgt.

8. Suspensionskonzentrat nach einem der Ansprüche 1 bis 7, **dadurch gekennzeichnet, dass** das Konzentrat mindestens ein Zusatzstoff ausgewählt aus der Gruppe, bestehend aus Dispergiermitteln, Frostschutzmitteln, schaumhemmenden Mitteln, Konservierungsmitteln, Antioxidantien, Spreitmitteln, Wasser und/oder Verdicker umfasst.

9. Verfahren zur Herstellung eines Suspensionskonzentrats gemäß einem der Ansprüche 1 bis 8, **dadurch gekennzeichnet, dass** die einzelnen Komponenten, zumindest umfassend
(a) mindestens einen agrochemischen Wirkstoff, dessen Schmelzpunkt oberhalb von 50 °C liegt und die eine insektizide und/oder akarizide Wirkung aufweist;
(b) mindestens ein Öl, ausgewählt aus der Gruppe, bestehend aus Mineralölen und/oder Paraffinölen; und
(c) mindestens ein Emulgiermittel; und
(d) mindestens ein Triglyzerid,
wobei das Triglyzerid auf gesättigten Fettsäuren basiert und die Fettsäure eine Kettenlänge zwischen 6 und 12 C-Atomen aufweist,
in den jeweils gewünschten Verhältnissen miteinander vermischt werden.

10. Verwendung eines Suspensionskonzentrats gemäß einem der Ansprüche 1 bis 9 zur Applikation von agrochemischen Wirkstoffen.

11. Verwendung nach Anspruch 10, **dadurch gekennzeichnet, dass** das Suspensionskonzentrat als Winterspritzmittel verwendet wird.

## Claims

1. Suspension concentrate, comprising the following components:
(a) at least one agrochemical active substance whose melting point is above 50°C and which has an insecticidal and/or acaricidal activity;
(b) at least one oil, selected from the group consisting of mineral oils and/or liquid paraffins;
(c) at least one emulsifier; and
(d) at least one triglyceride,
with the triglyceride being based on saturated fatty acids and the fatty acid having a chain length of between 6 and 12 C atoms.

2. Suspension concentrate according to Claim 1, **characterized in that** the triglyceride is based on fatty acids, with the content of fatty acids with a chain length of between 8 and 10 carbon atoms in the fatty acids used in the triglyceride being between 90 and 100%.

3. Suspension concentrate according to either of Claims 1 and 2, **characterized in that** the triglyceride is glycerol trioctanoate or glycerol tridecanoate.

4. Suspension concentrate according to any of Claims 1 to 3, **characterized in that** the triglyceride content in the suspension concentrate is from 0.5 to 10% by weight, based on the suspension concentrate.

5. Suspension concentrate according to any of Claims 1 to 4, **characterized in that** the agrochemical active substance is selected from the group consisting of neonicotinoids, pyrethroids, organophosphates, carbamates, 4-aminobut-2-enolide compounds, sulfoximine compounds and ketoenols.

6. Suspension concentrate according to any of Claims 1 to 5, **characterized in that** the agrochemical active substance is selected from the group consisting of imidacloprid, thiamethoxam, clothianidin, dinotefuran, thiacloprid, acetamiprid, deltamethrin, beta-cyfluthrin, endosulfan, 4-{[(6-chloropyrid-3-yl)methyl] (2,2-difluoroethyl)amino}furan-2(5H)-one (Compound A), sulfoxaflor and spirotetramat.

7. Suspension concentrate according to any of Claims 1 to 6, **characterized in that** the agrochemical active substance content is from 0.1 to 5% by weight, in each case based on the suspension concentrate.

8. Suspension concentrate according to any of Claims 1 to 7, **characterized in that** the concentrate comprises at least one additive selected from the group consisting of dispersants, antifreeze agents, antifoams, preservatives, antioxidants, spreaders, water and/or thickeners.

9. Process for the preparation of a suspension concentrate according to any of Claims 1 to 8, **characterized in that** the individual components, at least comprising
(a) at least one agrochemical active substance whose melting point is above 50°C and which has an insecticidal and/or acaricidal activity;
(b) at least one oil, selected from the group consisting of mineral oils and/or liquid paraffins; and
(c) at least one emulsifier; and
(d) at least one triglyceride,
with the triglyceride being based on saturated fatty acids and the fatty acid having a chain length of between 6 and 12 C atoms,
are mixed with each other in the ratios desired in each case.

10. Use of a suspension concentrate according to any of Claims 1 to 9 for the application of agrochemical active substances.

11. Use according to Claim 10, **characterized in that** the suspension concentrate is used as a dormancy spray.

## Revendications

1. Concentré de suspension, contenant les constituants suivants :
(a) au moins un agent actif agrochimique, dont le point de fusion est supérieur à 50 °C et qui présente un effet insecticide et/ou acaricide ;
(b) au moins une huile, choisie dans le groupe constitué par les huiles minérales et/ou les huiles paraffiniques ;
(c) au moins un émulsifiant ; et
(d) au moins un triglycéride,
le triglycéride étant à base d'acides gras saturés et l'acide gras présentant une longueur de chaîne comprise entre 6 et 12 atomes C.

2. Concentré de suspension selon la revendication 1, **caractérisé en ce que** le triglycéride est à base d'acides gras, la proportion d'acides gras ayant une longueur de chaîne comprise entre 8 et 10 atomes par rapport aux acides gras utilisés dans le triglycéride étant comprise entre 90 et 100 %.

3. Concentrés de suspension selon l'une quelconque des revendications 1 à 2, **caractérisés en ce que** le triglycéride est le trioctanoate de glycérine ou le tridécanoate de glycérine.

4. Concentré de suspension selon l'une quelconque des revendications 1 à 3, **caractérisé en ce que** la teneur du triglycéride dans le concentré de suspension est de 0,5 à 10 % en poids, par rapport au concentré de suspension.

5. Concentré de suspension selon l'une quelconque des revendications 1 à 4, **caractérisé en ce que** l'agent actif agrochimique est choisi dans le groupe constitué par les néonicotinoïdes, les pyréthroïdes, les organophosphates, les carbamates, les composés de 4-aminobut-2-énolide, les composés de sulfoximine et les cétoénols.

6. Concentré de suspension selon l'une quelconque des revendications 1 à 5, **caractérisé en ce que** l'agent actif agrochimique est choisi dans le groupe constitué par l'imidaclopride, le thiaméthoxam, la clothianidine, le dinotéfurane, le thiaclopride, l'acétamipride, la deltaméthrine, la bêta-cyfluthrine, l'endosulfane, la 4-{[(6-chloropyrid-3-yl)méthyl](2,2-difluoroéthyl)amino}furan-2(5H)-one (composé A), le sulfoxaflor et le spirotétramate.

7. Concentré de suspension selon l'une quelconque des revendications 1 à 6, **caractérisé en ce que** la teneur en agent actif agrochimique est de 0,1 à 5 % en poids, à chaque fois par rapport au concentré de suspension.

8. Concentré de suspension selon l'une quelconque des revendications 1 à 7, **caractérisé en ce que** le concentré comprend au moins un additif choisi dans le groupe constitué par les agents de dispersion, les agents antigel, les agents antimousse, les conservateurs, les antioxydants, les agents d'étalement, l'eau et/ou les épaississants.

9. Procédé de fabrication d'un concentré de suspension selon l'une quelconque des revendications 1 à 8, **caractérisé en ce que** les composants individuels, comprenant au moins :
(a) au moins un agent actif agrochimique, dont le point de fusion est supérieur à 50 °C et qui présente un effet insecticide et/ou acaricide ;
(b) au moins une huile, choisie dans le groupe constitué par les huiles minérales et/ou les huiles paraffiniques ; et
(c) au moins un émulsifiant ; et
(d) au moins un triglycéride,
le triglycéride étant à base d'acides gras saturés et l'acide gras présentant une longueur de chaîne comprise entre 6 et 12 atomes C,
sont mélangés les uns avec les autres en les rapports respectifs souhaités.

10. Utilisation d'un concentré de suspension selon l'une quelconque des revendications 1 à 9 pour l'application d'agents actifs agrochimiques.

11. Utilisation selon la revendication 10, **caractérisée en ce que** le concentré de suspension est utilisé sous la forme d'un agent à pulvériser l'hiver.
